# EUROPEAN PATENT APPLICATION

(11) **EP 3 594 537 A1**
(43) Date of publication of application: **15.01.2020**
(21) Application number: 18764752.4
(22) Date of filing: 26.01.2018
(51) Int. Cl.: F16J 15/08

(54) **GASKET**

(30) Priority: 06.03.2017 JP 2017042142
(71) Applicant: NOK Corporation, Minato-ku Tokyo 105-8585 (JP)
(72) Inventor: TANJI Isao, Nihonmatsu-shi Fukushima 964-0811 (JP); NAKAOKA Shinya, Makinohara-shi Shizuoka 421-0532 (JP)
(74) Representative: TBK
(86) International application number: PCT/JP2018/002384
(87) International publication number: WO 2018/163642

(57) **Abstract**

Provided is a gasket formed by coating rubber on both surfaces of a metal plate. In order to suppress stress relaxation, the gasket is provided with: a base (111) formed by a flat plate-like metal member; and a seal portion (121) including as a base body a seal base (124) that is formed to a thickness smaller than that of the base (111) and formed by a flat plate-like metal member having a rubber-like elastic material layer (123) on a surface thereof. The seal portion (121) is provided with a bead (125) formed in a bent shape. The base (111) and the seal portion (121) are formed in, for example, annular shapes having different diameters. The base (111) and the seal portion (121) are coupled to each other by a coupling portion (131) in such a way that the base (111) and the seal base (124) are positioned in the same plane and that the bead (125) protrudes from a plane including at least one surface of the base (111).

## Description

### Technical Field

The present invention relates to a gasket.

### Background Art

Various kinds of sealing members for automobile parts and industrial machine parts have been developed and put to practical use.

Among them, there are rubber O-rings that have a long history. While the O-ring has an advantage that the structure is relatively simple, it also has a disadvantage that grooving of members to be sealed is required for fitting the O-ring, that the number of manufacturing processes increases corresponding to processes of attaching the O-ring to grooves, and that it is not possible to confirm a mounting state from the outside after fastening sealing surfaces together. In addition, it is also the fate of the rubber O-ring to require a high standard for the surface roughness and parallelism of the sealing surfaces.

In view of this, there has been developed a liquid gasket that creates a seal between sealing surfaces only by applying it to the sealing surfaces. Since the liquid gasket has liquidity before curing, the tolerance for the surface roughness and parallelism of the sealing surfaces is high. However, even the liquid gasket is not omnipotent. When considering employment thereof, it is necessary to take into account that degreasing of the sealing surfaces is required as a pre-process of the application process, that dedicated equipment for the application is necessary in the application process, and that since the drying time should be ensured after the application, the manufacturing cycle time is prolonged.

As a sealing member that can overcome the above-described various problems that are unavoidable for the rubber O-ring and the liquid gasket, the inventors of this application have examined employment of a plate gasket and worked on an improvement thereof.

Plate gaskets are widely used as gaskets that seal between, for example, cylinder blocks and cylinder heads in automobile engines. This type of gasket is, as one example, formed by laminating a plurality of stainless steel flat plates, forming a protruding portion called a bead at a position around a combustion chamber by press working, and coating rubber on surfaces thereof (see, e.g. Non-Patent Document 1, first line in left column of page 92 to last line in left column of page 93, and FIGS. 1 and 2).

Patent Document 1 discloses, as a gasket for a speed reducer, a plate gasket configured differently from the above-described gasket for the cylinder head. This gasket (seal ring (34)) has a shape with a step height difference between the inner peripheral side and the outer peripheral side, and a rubber layer is provided on both surfaces of a metal base. In Patent Document 1, the metal base is referred to as "steel plate portions (41a), (42a), (43a)", and the rubber layers are referred to as "first rubber portion (41b), third rubber portion (42b), fifth rubber portion (43b) and second rubber portion (41c), fourth rubber portion (42c), sixth rubber portion (43c)" (see paragraphs [0043] to [0045] of Patent Document 1).

In the invention described in Patent Document 1, the gasket (seal ring (34)) is used as a component that is interposed between a first housing (31) and a second housing (33) of the speed reducer for sealing. The first housing (31) houses components such as an input shaft (11) coupled to a steering wheel, and an output shaft (12) coupled to the input shaft (11) via a steering angle ratio varying steering device (2). The second housing (33) houses components such as a pinion gear (22a) coupled to the output shaft (12) via a torsion bar (21) and coupled to a rack shaft.

### Prior Art Documents

### Patent Document

Patent Document 1: Japanese Unexamined Patent Publication No. 2007-146961

### Non-Patent Document

Non-Patent Document 1: Kazuhiko ADACHI and five others, "Development of Stainless Steel Sheets for Cylinder Head Gasket", NIPPON STEEL & SUMITOMO METAL TECHNICAL REPORT, No. 396, July 2013, pp. 92-98

### Summary of the Invention

### Problem to be Solved by the Invention

Since the gasket formed by coating rubber on both surfaces of the metal plate as described above is coated with the rubber on the surfaces, it has excellent characteristics that the tolerance for the surface roughness and parallelism of machined surfaces serving as mating surfaces is high. In the meantime, the inventors of the invention according to this application have performed an endurance test and, as a result, confirmed that stress relaxation in which initial tightening torque (axial force) decreases occurs at a position in the vicinity of a bolt that fastens together two members to be sealed. This phenomenon is presumably caused by the rubber becoming thinner at the position in the vicinity of the bolt due to tightening of the bolt.

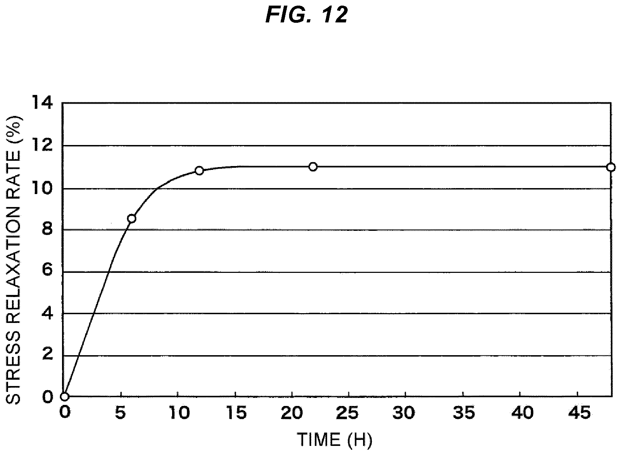

FIG. 12 is a stress relaxation characteristic graph illustrating the results of an endurance test performed for a gasket formed by coating rubber on both surfaces of a metal plate, wherein the abscissa axis represents time (H) and the ordinate axis represents stress relaxation rate (%). As is clear also from this graph, the stress relaxation rate rapidly increases with the lapse of time, then starts to decrease in increase rate after the lapse of about eight hours, and then becomes substantially flat after the lapse of about 15 hours.

As a result of repeating endurance tests while changing the conditions, the present inventors have confirmed that when the above-described gasket is used as a sealing member, stress relaxation of about 10 to 30% occurs at the position in the vicinity of the bolt.

### Means for Solving the Problem

One aspect of a gasket of the present invention includes: a base including a flat plate-like metal member; a seal portion including a seal base and a bead, the seal base including a flat plate-like metal member having a rubber-like elastic material layer laminated on a surface, the seal base having a thickness smaller than a thickness of the base, the bead formed by a bent shape of the seal base; and a coupling portion coupling the base and the seal portion to each other such that the base and the seal base are positioned in the same plane and that the bead protrudes from a plane including at least one surface of the base.

In order to solve the above-described problems, another aspect of a gasket of the present invention includes: a base including a flat plate-like metal member; a seal portion configured such that a foam rubber layer made of foam rubber is laminated on a surface of a flat plate-like metal member having a thickness smaller than a thickness of the base, the seal portion having a thickness greater than the thickness of the base as a whole; and a coupling portion coupling the base and the seal portion to each other such that the base and the seal base are positioned in the same plane and that the foam rubber layer protrudes from a plane including at least one surface of the base.

### Effect of the Invention

According to the present invention, it is possible to suppress stress relaxation that occurs in the bead.

### Brief Description of Drawings

[FIG. 1] is a front view illustrating, as one example of a speed reducer in which a gasket of a first embodiment of the present invention is used, an upper housing (first housing) and a lower housing (second housing) in a separated state.
[FIG. 2] is a block diagram for exemplarily explaining a schematic configuration of the speed reducer.
[FIG. 3] is a plan view illustrating the gasket of the first embodiment of the present invention.
[FIG. 4] is a sectional view taken along line A-A in FIG. 3 and illustrating only a part with a base being cut off.
[FIG. 5] is a sectional view taken along line B-B in FIG. 3 and illustrating, on an enlarged scale, a coupling structure between the base and a seal portion by a coupling portion.
[FIG. 6] illustrates processes of joining the upper housing and the lower housing of the speed reducer to each other, wherein (A) is a longitudinal sectional front view of a state where the upper housing is made to face the lower housing on which the gasket is placed, and (B) is a longitudinal sectional front view of a state where the lower housing and the upper housing are joined together.
[FIG. 7] is a longitudinal sectional front view exemplarily illustrating a surface pressure distribution of the seal portion that seals between the lower housing and the upper housing.
[FIG. 8] is a plan view illustrating a gasket of a second embodiment of the present invention.
[FIG. 9] is a sectional view taken along line A-A in FIG. 8 and illustrating only a part with a base being cut off.
[FIG. 10] is a sectional view taken along line B-B in FIG. 8 and illustrating, on an enlarged scale, a coupling structure between the base and a seal portion by a coupling portion.
[FIG. 11] illustrates processes of joining the upper housing and the lower housing of the speed reducer to each other, wherein (A) is a longitudinal sectional front view of a state where the upper housing is made to face the lower housing on which the gasket is placed, and (B) is a longitudinal sectional front view of a state where the lower housing and the upper housing are joined together.
[FIG. 12] is a stress relaxation characteristic graph illustrating the results of an endurance test performed for a gasket formed by coating rubber on both surfaces of a metal plate, wherein the abscissa axis represents time (H) and the ordinate axis represents stress relaxation rate (%).

### Description of Embodiments

### [Speed Reducer]

This embodiment is an example applied to a speed reducer 11 that forms part of a steering device of a vehicle. A description will be given of the speed reducer 11 in which a gasket 101 of this embodiment is used.

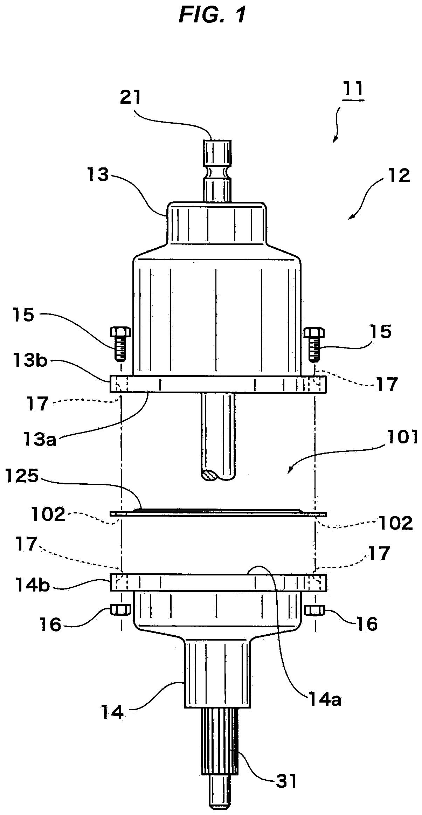

As illustrated in FIG. 1, a housing 12 of the speed reducer 11 is divided into an upper housing 13 and a lower housing 14. The upper housing 13 and the lower housing 14 each have a cylindrical cup shape and each include a joint surface 13a, 14a around an opening portion. The upper housing 13 and the lower housing 14 are integrated such that the joint surfaces 13a, 14a are joined together via the gasket 101.

The upper housing 13 and the lower housing 14 are joined together by providing flanges 13b, 14b extending circumferentially from the joint surface 13a of the upper housing 13 and the joint surface 14a of the lower housing 14, and fastening the flanges 13b, 14b together by bolts 15 and nuts 16. In order to allow the bolts 15 to pass through, the flanges 13b, 14b are provided with bolt holes 17 along the axial direction of the speed reducer 11.

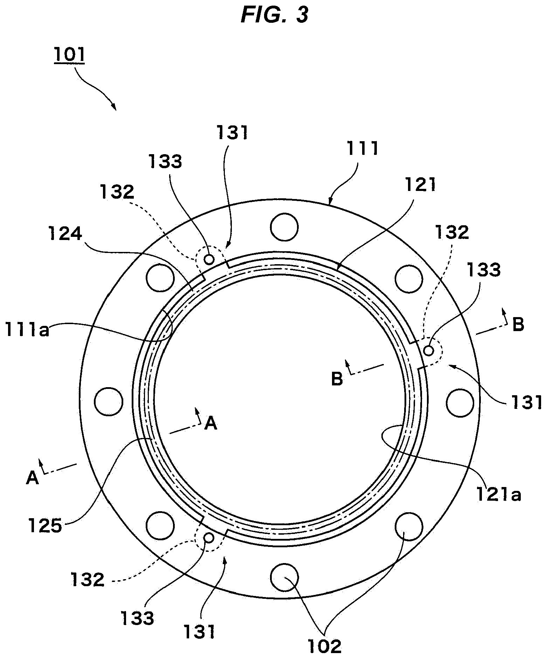

The gasket 101 is also provided with a plurality of through-holes 102 aligned with the positions of the bolt holes 17 (see also FIG. 3). Therefore, when joining together the upper housing 13 and the lower housing 14 with the gasket 101 interposed therebetween, the bolts 15 are inserted through the through-holes 102 so that the gasket 101 is mounted between the upper housing 13 and the lower housing 14.

The speed reducer 11 is interposed between a steering shaft (not illustrated) of the vehicle and a rack and pinion mechanism (not illustrated entirely) configured to change the angle of front wheels of the vehicle, varies the steering angle ratio of the steering shaft, and transmits it to the rack and pinion mechanism. As a structure therefor, in the speed reducer 11, an input shaft 21 and an output shaft 22 on the input side are rotatably mounted to the upper housing 13, and a pinion gear 31 on the output side is rotatably mounted to the lower housing 14. The input shaft 21 is coupled to the steering shaft, and the pinion gear 31 forms part of the rack and pinion mechanism.

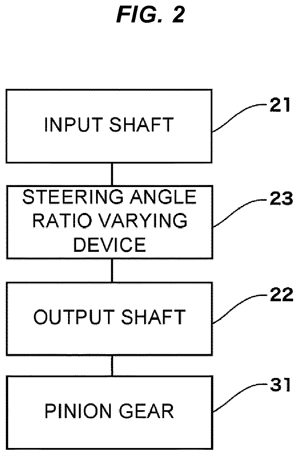

As illustrated in FIG. 2, a steering angle ratio varying device 23 is provided between the input shaft 21 and the output shaft 22. The steering angle ratio varying device 23 is a device for varying the rotation angle that is input to the input shaft 21 by the steering of the steering shaft, and transmitting the rotation with the varied angle to the output shaft 22.

The gasket 101 of this embodiment will be described.

### [First Embodiment]

The first embodiment will be described with reference to FIGS. 1 to 7.

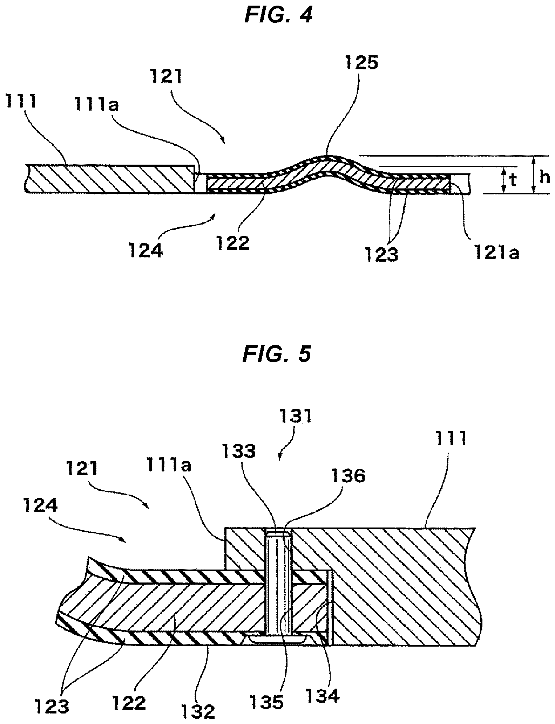

As illustrated in FIGS. 3 and 4, the gasket 101 is configured such that a base 111 and a seal portion 121 are coupled to each other by coupling portions 131. The base 111 and the seal portion 121 are each formed in an endless shape having an opening portion 111a, 121a at its central portion and, more specifically, formed in an annular shape. The base 111 and the seal portion 121 are coupled to the coupling portions 131 in the state where the base 111 and the seal portion 121 are disposed concentrically and the seal portion 121 is disposed on the inner peripheral side of the base 111. The coupling portions 131 fix three coupling pieces 132, protruding from an outer peripheral surface of the seal portion 121 at an interval of 120 degrees, to the base 111 by means of pins 133.

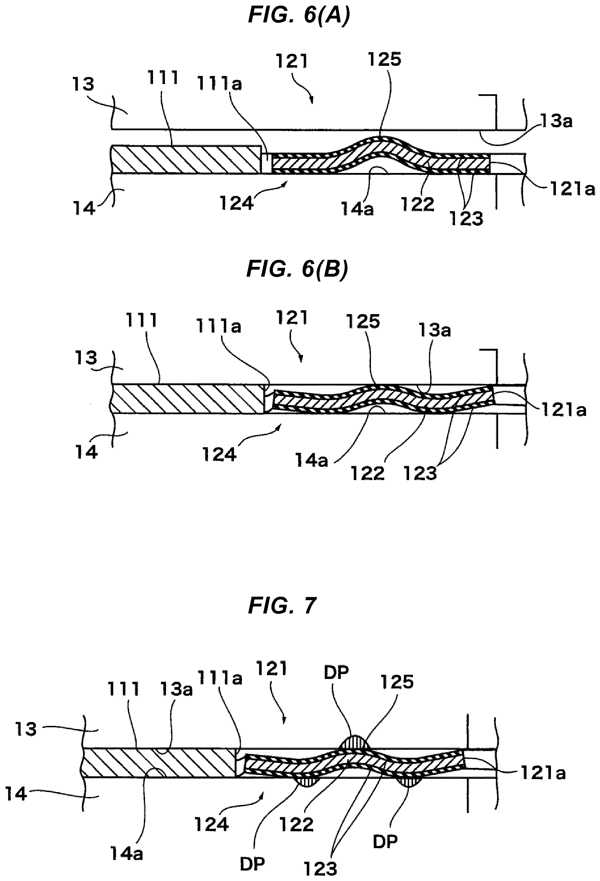

The base 111 is formed by a flat plate-like metal member. The base 111 is provided with the through-holes 102 of the gasket 101 described above. The through-holes 102 are arranged at regular intervals on the circumference that is concentric with the base 111. Since the base 111 is the metal member, its elastic deformation is not assumed so that the base 111 defines the opposing interval between the upper housing 13 and the lower housing 14 that are joined together (see FIG. 6(B) and FIG. 7).

The seal portion 121 includes as a base body a seal base 124 formed by coating a rubber-like elastic material layer 123 on surfaces of a base member 122 that is a flat plate-like metal member. The thickness of the seal base 124 is smaller than that of the base 111 and is set to, for example, about half of the thickness of the base 111. The seal base 124 has a bent shape along a concentric circle, and this bent shape is defined as a bead 125. The height h of the bead 125 is set to a dimension greater than the thickness t of the base 111 (see FIG. 4).

The base member 122 of the seal base 124 is formed of a material such as, for example, stainless steel, cold-rolled steel sheet, galvanized steel sheet, or aluminum-coated steel sheet. Rubber that is used as a material of the rubber-like elastic material layer 123 contains as a compound at least one of, for example, nitrile rubber, styrene-butadiene rubber, fluorine rubber, acrylic rubber, and silicon rubber.

As illustrated in FIG. 5, the coupling portions 131 fix the three coupling pieces 132, protruding from the outer periphery of the seal portion 121, to the back side of the base 111. The base 111 is formed in its back surface with recesses 134 at an interval of 120 degrees along the inner peripheral edge defining the opening portion 111a, and the coupling pieces 132 are fitted into the recesses 134. The recess 134 is formed in the same shape as the coupling piece 132 fitted into the recess 134 and is offset in a recessed shape from one surface, i.e. the back surface, of the base 111 in the same dimension as the thickness of the coupling piece 132. As a structure for fixing the coupling piece 132, fitted into the recess 134, to the base 111, the coupling piece 132 is formed with a mounting hole 135, and the base 111 is formed with a pin hole 136 passing through from the inside of the recess 134 to the front surface of the base 111. Accordingly, by press-fitting the pins 133, passing through the mounting holes 135, into the pin holes 136, the coupling pieces 132 are fixed to the base 111.

Herein, the positional relationship between the base 111 and the seal portion 121 coupled together by the coupling portions 131 will be described.

As illustrated in FIGS. 4 and 5, the seal base 124 is configured such that its one surface on the side where the bead 125 does not protrude is positioned in the same plane as the back surface of the base 111. In this state, since, as described above, the height h of the bead 125 is set to the dimension greater than the thickness t of the base 111, the bead 125 protrudes by a dimension (h-t) from the front surface, being the other surface, of the base 111. Under this condition, the thickness of the base 111 is, as one example, defined to be about 50 to 60% of the height h of the bead 125, i.e. the height of the seal portion 121.

In this configuration, the speed reducer 11 is required airtightness between the upper housing 13 and the lower housing 14. In the speed reducer 11 of this embodiment, when joining the upper housing 13 and the lower housing 14 to each other, the gasket 101 is interposed between the joint surfaces 13a, 14a of the upper and lower housings 13, 14, thereby ensuring the airtightness.

In a process of joining the upper housing 13 and the lower housing 14 to each other, the gasket 101 is placed on the joint surface 14a of the lower housing 14 as illustrated in FIG. 6(A). In this event, the positions of the through-holes 102 of the gasket 101 are aligned with the bolt holes 17 provided in the flange 14b of the lower housing 14. Then, the upper housing 13 is placed on the lower housing 14 while aligning the positions of the bolt holes 17 of the upper and lower housings 13, 14 with each other, and the flanges 13b, 14b thereof are fastened together by the bolts 15 and the nuts 16. Consequently, as illustrated in FIG. 6(B), the bead 125 is compressed so that the gasket 101 has a shape with the thickness t of the base 111 and is in a state of being sandwiched between the upper housing 13 and the lower housing 14.

In this event, the bead 125 is pressed at its top by the joint surface of the upper housing 13 so as to be deformed to a squashed shape and expands its foot placed on the joint surface 14a of the lower housing 14. Consequently, as illustrated in FIG. 6(B), since the metal base member 122 with high hardness maintains the bent shape, the seal portion 121 is deformed to a shape with its edges on the inner peripheral side and the outer peripheral side raised. On the outer peripheral side of the seal portion 121, the coupling pieces 132 fixed to the base 111 do not change the positions thereof, but the seal portion 121 is deformed to a raised shape in regions between the coupling pieces 132. As a result, the bead 125 abuts against the joint surfaces 13a, 14a of the upper housing 13 and the lower housing 14 at three portions, i.e. two portions of its lower surface and one portion of its upper surface, and exhibits a surface pressure distribution DP as exemplarily illustrated in FIG. 7. Consequently, the joint surfaces 13a, 14a of the upper housing 13 and the lower housing 14 are sealed in regions of the three portions of the bead 125 exhibiting the surface pressure distribution DP.

As described above, since the base 111 of the gasket 101 is the metal member, its elastic deformation is not assumed. Therefore, the upper housing 13 and the lower housing 14 fastened together face each other while being spaced apart from each other by the thickness t of the base 111. In this event, since, as described above, the thickness of the seal portion 121 of the gasket 101 is set to about half of the thickness of the base 111, the bead 125 is not fully squashed and thus has a further bendable margin. Therefore, plastic deformation of the bead 125 is unlikely to occur compared to the case where the bead 125 is fully squashed. Even compared to the case where only the seal portion 121 is used as a gasket without providing the base 111, the squashed amount of the rubber-like elastic material layer 123 is reduced so that, correspondingly, plastic deformation of the rubber-like elastic material layer 123 is unlikely to occur. Therefore, with the gasket 101 of this embodiment, it is possible to suppress stress relaxation that occurs in the bead 125.

To give a further description, the base 111 of the gasket 101 defines the opposing interval between the upper housing 13 and the lower housing 14 that are joined together (see FIG. 6(B) and FIG. 7). Therefore, with the gasket 101 of this embodiment, it is possible to restrict the compression amount of the bead 125 by the thickness of the base 111.

In other words, the gasket 101 of this embodiment is configured such that the compression amount of the bead 125 is controlled by the base 111 formed by the flat plate-like metal member, for example, a steel plate, thereby preventing the bead 125 from being fully compressed. Consequently, the restoration characteristics of the bead 125 become excellent so that the resilience of the bead 125 is maintained even after the bead 125 is compressed by the use of the gasket 101. Therefore, when the pressure is applied to the bead 125 by joining together the joint surface 13a of the upper housing 13 and the joint surface 14a of the lower housing 14 via the gasket 101 and fastening together the flanges 13b, 14b thereof by the bolts 15 and the nuts 16, the acceptable amount of the bead 125 until the mouth opening of the housing 12 occurs due to impairment of the resilience of the bead 125, i.e. the margin until the bead 125 does not function, is increased. As a result, when the upper housing 13 and the lower housing 14 are joined together, it is possible to suppress stress relaxation that occurs due to a rapid decrease in tightening torque (axial force) with the lapse of time, and to prevent a rapid increase in stress relaxation rate.

According to this embodiment, the coupling portions 131 position the seal base 124 in the same plane as one surface (back surface) of the base 111 and protrude the bead 125 from a plane including the other surface (front surface) of the base 111 in the seal portion 121. Therefore, since the protruding amount of the bead 125 from the base 111 can be defined as the compression amount of the bead 125, the surface pressure distribution DP (see FIG. 7) can be easily calculated so that it is possible to facilitate the design of the respective portions.

According to this embodiment, the base 111 and the seal portion 121 are each formed in the endless shape (annular shape) having the opening portion 111a at its central portion, and one of the base 111 and the seal portion 121 is disposed in the opening portion 111a, 121a of the other of the base 111 and the seal portion 121. Therefore, it is possible to provide excellent sealability to members that require an omnidirectional seal, for example, sealing objects such as the upper housing 13 and the lower housing 14 of the speed reducer 11.

Since the seal portion 121 is disposed on the inner side of the base 111, the seal portion 121 can seal the sealing objects at a position closer to a region, where sealing is necessary, than the base 111 that defines the opposing interval between the sealing objects.

According to this embodiment, the coupling portion 131 includes the coupling piece 132 protruding from the seal portion 121 toward the base 111 and formed by the metal member (the base member 122) of the seal base 124, and the recess 134 that is offset in the recessed shape from one surface (back surface) of the base 111 in the dimension equal to or greater than at least the thickness of the coupling piece 132 and couples the coupling piece 132. Therefore, the base 111 and the seal portion 121 can be coupled to each other without generating a protrusion from either the front or back surface of the base 111.

### [Second Embodiment]

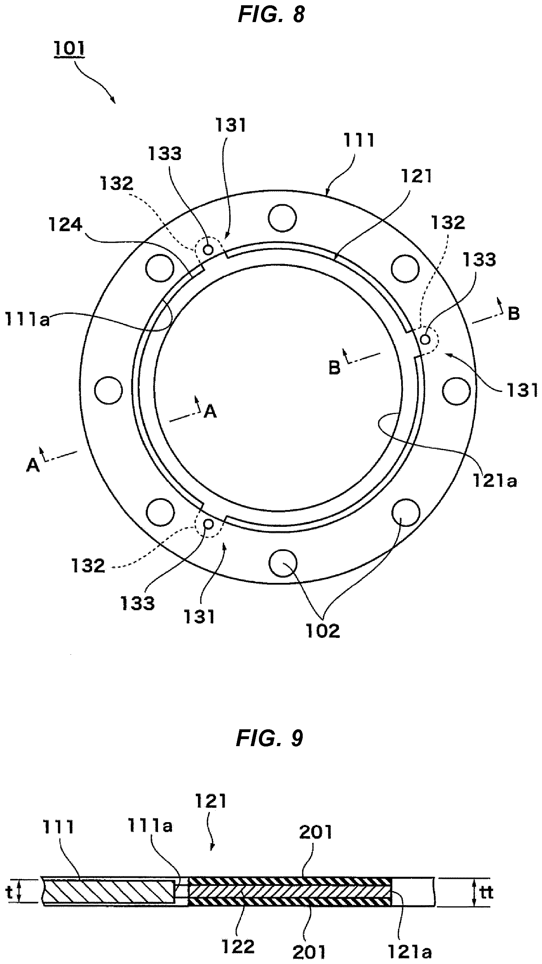

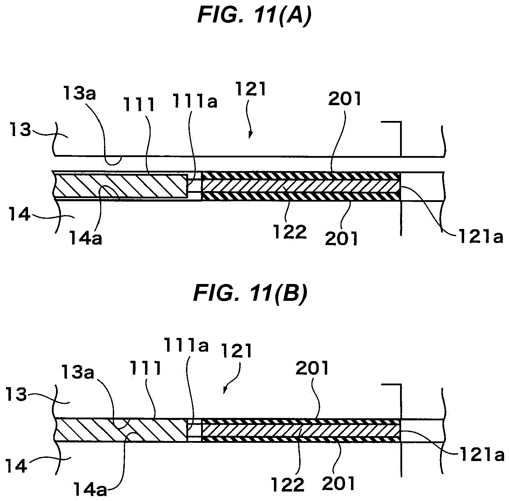

The second embodiment will be described with reference to FIG. 8 to FIGS. 11(A) and 11(B). The same portions as those of the first embodiment are denoted by the same reference numerals and a description thereof is omitted.

As illustrated in FIGS. 8 and 9, differently from the first embodiment, a gasket 101 of this embodiment does not have the bead 125 (see FIGS. 3 and 4 for comparison). As a structure corresponding to the bead 125 of the first embodiment, this embodiment employs a foam rubber layer 201.

A seal portion 121 of this embodiment is provided with the foam rubber layer 201 on both surfaces of a base member 122. As illustrated in FIG. 9, the thickness of the base member 122 is set to about half of the dimension of the thickness t of a base 111, and the dimension of the total thickness tt of the gasket 101 provided with the foam rubber layer 201 on both surfaces of the base member 122 is set to be greater than the dimension of the thickness t of the base 111. For example, the thickness t of the base 111 is preferably set to about 0.3 to 0.9 times the total thickness tt of the gasket 101.

As one example, the foam rubber layer 201 is obtained by mixing an organic foaming agent and various solvents such as, for example, a crosslinking agent, a softener, and a reinforcing agent into material rubber such as synthetic rubber, and then decomposing and foaming the foaming agent by vulcanization. The formation of the foam rubber layer 201 on the surface of the base member 122 can be achieved by a method such as, for example, bonding, baking, application, or coating.

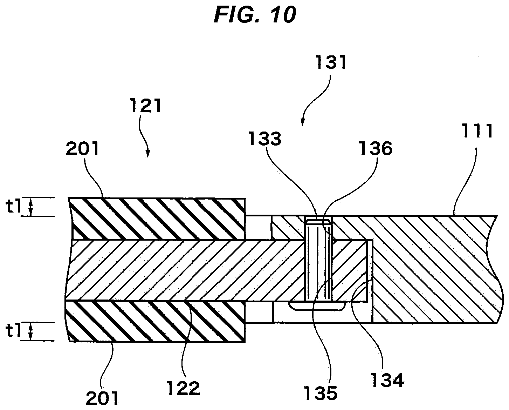

As illustrated in FIG. 10, a coupling portion 131 fixes the base 111 and the seal portion 121 to each other in such a way that the middle position of the base 111 in its thickness direction and the middle position of the base member 122 of the seal portion 121 in its thickness direction coincide with each other. Therefore, the dimensions of protruding amounts t1 of the foam rubber layers 201 protruding from the front and back surfaces of the base 111 are equal to each other at the front and back surfaces of the base 111.

With this configuration, in a process of joining the upper housing 13 and the lower housing 14 to each other, the gasket 101 is placed on the joint surface 14a of the lower housing 14 as illustrated in FIG. 11(A). In this event, the positions of through-holes 102 of the gasket 101 are aligned with the bolt holes 17 provided in the flange 14b of the lower housing 14. Then, the upper housing 13 is placed on the lower housing 14 while aligning the positions of the bolt holes 17 of the upper and lower housings 13, 14 with each other, and the flanges 13b, 14b thereof are fastened together by the bolts 15 and the nuts 16. Consequently, as illustrated in FIG. 11(B), the foam rubber layers 201 are compressed so that the gasket 101 has a shape with the thickness t of the base 111 and is in a state of being sandwiched between the upper housing 13 and the lower housing 14. Consequently, the joint surfaces 13a, 14a of the upper housing 13 and the lower housing 14 are sealed.

As described above, since the base 111 of the gasket 101 is the metal member, its elastic deformation is not assumed. Therefore, the upper housing 13 and the lower housing 14 fastened together face each other while being spaced apart from each other by the thickness t of the base 111. In this event, since, as described above, the seal portion 121 of the gasket 101 is configured such that the thickness of the base member 122 being its metal member is set to about half of the thickness of the base 111, the foam rubber layers 201 are not largely compressed. That is, compared to the case where the upper housing 13 and the lower housing 14 are fastened together with only the seal portion 121 sandwiched therebetween without providing the base 111, the compression amounts of the foam rubber layers 201 are reduced so that plastic deformation of the foam rubber layers 201 is unlikely to occur. Therefore, with the gasket 101 of this embodiment, it is possible to suppress stress relaxation that occurs in the foam rubber layers 201.

According to this embodiment, the foam rubber layer 201 is laminated on both surfaces of the metal member (the base member 122) forming a base body of the seal portion 121. Therefore, when sandwiched between the upper housing 13 and the lower housing 14, the compression of the foam rubber layers 201 occurs on both surfaces of the base member 122 so that, compared to a configuration in which the foam rubber layer 201 is provided on only one surface of the base member 122, it is possible to further reduce plastic deformation that occurs in the foam rubber layers 201. In addition, in this embodiment, since the protruding amounts t1 of the foam rubber layers 201 protruding from the front and back surfaces of the base 111 are equal to each other at the front and back surfaces of the base 111, the compression amounts of the foam rubber layers 201 at the front and back surfaces of the base 111 can be made equal to each other so that it is possible to still further reduce plastic deformation that occurs in the foam rubber layers 201. As a result, it is possible to more effectively suppress stress relaxation that occurs in the foam rubber layers 201.

### [Modifications]

Various modifications or changes are permitted in implementation.

For example, in the first embodiment, the structure is given by way of example where the rubber-like elastic material layer 123 is coated on the base member 122 in the seal portion 121, but, in implementation, the rubber-like elastic material layer 123 may be provided on the base member 122 using another method. For example, the rubber-like elastic material layer 123 may be formed by applying rubber to the base member 122, or a rubber sheet may be prepared in advance and then the rubber sheet may be fixed to the base member 122 by a method such as bonding or baking, thereby forming the rubber-like elastic material layer 123. When bonding the rubber sheet to the base member 122, it is preferable to provide a layer of a surface treatment agent between the base member 122 and a layer of an adhesive.

Further, as the materials of the base member 122, the rubber-like elastic material layer 123 (first embodiment), and the foam rubber layer 201 (second embodiment) that form the seal portion 121, various materials not limited to those introduced in the above-described embodiments can be used.

In the above-described two embodiments, the example is given where, for the coupling portions 131, the three coupling pieces 132 are provided to the seal portion 121 at the interval of 120 degrees, but not limited thereto in implementation. For example, the arrangement interval is not necessarily the regular interval, and further, the number of the coupling pieces 132 may be two or four or more, i.e. other than three.

In the above-described two embodiments, the recesses 134 each having the shape corresponding to the coupling piece 132 are given for the coupling portions 131 by way of example, but, in implementation, for example, the entire circumference along the edge of the opening portion 111a of the base 111 may form the recess 134.

In the embodiments, the example is given where the gasket 101 is used as the member that seals the upper housing 13 and the lower housing 14 of the speed reducer 11, but the application object of the gasket 101 is not limited thereto, and it is possible to use the gaskets 101 as sealing members for various sealing objects.

In addition to the above, any possible modifications or changes are permitted in implementation.

### Description of Reference Numerals

- 11: speed reducer
- 12: housing
- 13: upper housing
- 13a: joint surface
- 14: lower housing
- 14a: joint surface
- 15: bolt
- 16: nut
- 17: bolt hole
- 21: input shaft
- 22: output shaft
- 101: gasket
- 102: through-hole
- 111: base
- 111a: opening portion
- 121: seal portion
- 121a: opening portion
- 122: base member
- 123: rubber-like elastic material layer
- 124: seal base
- 125: bead
- 131: coupling portion
- 132: coupling piece
- 133: pin
- 134: recess
- 135: mounting hole
- 136: pin hole

## Claims

1. A gasket comprising:
a base including a flat plate-like metal member;
a seal portion including a seal base and a bead, the seal base including a flat plate-like metal member having a rubber-like elastic material layer laminated on a surface, the seal base having a thickness smaller than a thickness of the base, the bead formed by a bent shape of the seal base; and
a coupling portion coupling the base and the seal portion to each other such that the base and the seal base are positioned in the same plane and that the bead protrudes from a plane including at least one surface of the base.

2. The gasket according to claim 1, wherein:
the coupling portion positions the seal base in the same plane as one surface of the base; and
the seal portion protrudes the bead from a plane including another surface of the base.

3. A gasket comprising:
a base including a flat plate-like metal member;
a seal portion configured such that a foam rubber layer made of foam rubber is laminated on a surface of a flat plate-like metal member having a thickness smaller than a thickness of the base, the seal portion having a thickness greater than the thickness of the base as a whole; and
a coupling portion coupling the base and the seal portion to each other such that the base and the seal base are positioned in the same plane and that the foam rubber layer protrudes from a plane including at least one surface of the base.

4. The gasket according to claim 3, wherein the foam rubber layer is laminated on both surfaces of the metal member.

5. The gasket according to any one of claims 1 to 4, wherein the base and the seal portion are each formed in an endless shape having an opening portion at a central portion, and one of the base and the seal portion is disposed in the opening portion of the other of the base and the seal portion.

6. The gasket according to claim 5, wherein the seal portion is disposed on an inner side of the base.

7. The gasket according to any one of claims 1 to 6, wherein the coupling portion comprises:
a coupling piece protruding from the seal portion toward the base and formed by the metal member of the seal base; and
a recess that is offset in a recessed shape from one surface of the base in a dimension equal to or greater than at least a thickness of the coupling piece and couples the coupling piece.
